# EUROPEAN PATENT APPLICATION

(11) **EP 1 994 970 A1**
(43) Date of publication of application: **26.11.2008**
(21) Application number: 07714718.9
(22) Date of filing: 21.02.2007
(51) Int. Cl.: A63F 13/12, A63F 13/00

(54) **COMMUNICATION GAME SYSTEM, COMMUNICATION GAME CONTROL METHOD, INFORMATION RECORDING MEDIUM, AND PROGRAM**

(30) Priority: 23.02.2006 JP 2006047288
(71) Applicant: Konami Digital Entertainment Co., Ltd., Minato-ku Tokyo 107-8324 (JP)
(72) Inventor: MORI, Shoji, Tokyo 106-6114 (JP)
(74) Representative: Rüger, Barthelt & Abel Patentanwälte
(86) International application number: PCT/JP2007/053218
(87) International publication number: WO 2007/097371

(57) **Abstract**

In an online game in which game players are able to communicate with each other by voice utterance, in order that information such as audio information representing a voice uttered by one of the game players in synchronization with video image information may be output in synchronization with video image information in a terminal on the side of the other game player, a sending end terminal (301) of an online game system (201) plays back sending end video image information when a playback start condition is satisfied, accepts the input of audio information from the game player, transmits to a receiving end terminal (401) audio information (synchronous audio information) and other than the synchronous audio information (asynchronous audio information) both of which were input during the playback. The receiving end terminal (401) receives audio information transmitted from the sending end terminal (301), audibly outputs the received audio information if the received audio information is asynchronous audio information, starts the playing back of receiving end video image information after the received information changes in type from asynchronous audio information to synchronous audio information, and performs buffering with respect to synchronous audio information so that the synchronous audio information is audibly output in synchronization with receiving end audio information.

## Description

### Technical Field

The present invention relates to an online game system and an online game control method, which are suitable for use in an online game, e.g., player-versus-player online game and MMORPG (Massively Multiplayer Online Playing Game) allowing mutual conversation by voice utterance between game players in which multimedia information (e.g., audio information representative of a voice uttered in synchronization with video image information by one of the game players and motion picture information as a result of shooting of the manner of a player's gestural movement) is output in synchronization with video image information in a terminal on the side of the other game player, and the present invention relates to a computer readable information recording medium on which is recorded a program that implements such an online game system and such an online game control method by a computer, and the program.

### Background Art

Conventionally, various types of techniques for player-versus-player games that make use of communication technologies have been proposed. One such game technique is disclosed, for example, in a patent literature:
Patent Literature 1: Japanese Patent No. 3496150

The [Patent Literature 1] discloses a technique in which, in order to provide, in a game system that provides a plurality of player-versus-player games, a network game system capable of representing the presence of a game player other than the opponent at low communication load, match-up information is efficiently transmitted to the other game player and, at that time, a certain parameter is modified to thereby boost the level of amusement of the game.

Meanwhile, user-interactive voice communication technologies via the Internet, for example, such as audio chat and IP (Internet Protocol) phone, have been used widely. Also in the field of online games, there has been proposed one that allows game players to have voice communications with each other by audio chat.

In addition to the above, it is conventional, for example, in the field of animation that, in a scene showing a combat between game characters who are appearing on the scene, one of the game characters performs a mortal blow while shouting either a name assigned to the mortal blow or a signature phrase in synchronization with the action of the mortal blow.

Accordingly, in addition to the demand for making it possible to make an audio chat available between the game players in an online game, there is a demand for increasing the degree of absorption-into-game of the game players by stimulating a game player to shout either a name of a mortal blow or a signature phrase in various types of games, for example, such as a player-versus-player game in which game characters combat with each other and a cooperative game in which game characters together combat with their enemy in cooperation.

In this case, the state of a game character who performs a mortal blow is played back and displayed as a video image also in a terminal that the other game player operates, and there is a demand for increasing the degree of absorption-into-game of a game player other than the one who performs a mortal blow by the arrangement that a name assigned to a mortal blow or a signature phrase that the game player shouted in synchronization with the video image playback is audibly output.

### Disclosure of Invention

### Problems to be Solved by the Invention

When implementing such a game, there is a delay in communications via a computer communication network, for example, such as the Internet. As a result, a certain length of time is required by the time that an audio chat or the condition of a manipulation performed by the game player is transmitted to a terminal on the other side. Besides, a certain length of time is required by the time that the playing back of video image is started by reading out video image information representative of, for example, the manner of a mortal blow from a DVD-ROM (Digital Versatile Disk) or by representing the movement of a polygon forming the shape of a game character. This produces the problem that the possibility that, even if a voice transmitted by audio chat is output as it is, the output voice will not be in synchronization with the video image is high.

In addition, there are cases where various types of multimedia information (audio chat, video chat et cetera) are exchanged whereby the condition of each game player himself/herself is made known to the other game player, and there is a demand for coping with such a situation.

The present invention is an invention intended to overcome the above described problem. Accordingly, the present invention relates to: an online game system suitable for use in an online game capable of providing interactive communication by means of voice utterance between game players, in which multimedia information (e.g., audio information representative of a voice uttered in synchronization with video image information by one of the game players and motion picture information as a result of shooting of the manner of a player's gestural movement) is output in synchronization with video image information in a terminal on the side of the other game player; an online game control method; a computer readable information recording medium on which is recorded a program that implements such an online game system and such an online game control method by a computer, and the program.

### Means for Solving The Problem

To this end, the following inventions are disclosed based on the principle of the present invention.

An online game system in accordance with a first aspect of the present invention is provided with a sending end terminal and a receiving end terminal, the former of which has a multimedia information input accepting unit, a sending end video image playing-back unit, and a sending unit and the latter of which has a receiving unit, a receiving end video image playing-back unit, and a multimedia information outputting unit. The online gaming system of the first aspect of the present invention is configured as follows.

In the first place, in the sending end terminal, the multimedia information input accepting unit accepts the input of multimedia information.
Typically, audio information representative of a voice uttered by a game player who is utilizing the sending end terminal is acquired by means of a microphone and then the information thus acquired is dealt with as a multimedia information input. Alternatively, it is also possible to utilize information as to a motion picture shot by means of a camera.

On the other hand, the sending end video image playing-back unit starts the playing back of sending end video image information when a predefined playback start condition is satisfied.
In terms of the foregoing example, if the playback start condition is satisfied when a command as to direct a game character to perform a mortal blow is input by a controller or by a voice, the video image of the mortal blow to be performed by the game character is displayed on the screen. Here, this video image display may be accomplished by playing back a motion picture file previously prepared. Alternatively, it may be arranged such that the bony-framework movement of the game character with the elapse of time corresponding to the mortal blow is defined in advance and, in accordance with this definition, the bony framework of the game character is varied to update the polygon information as to the exterior appearance of the game character to thereby provide a 3-D graphics display.

Furthermore, the sending unit distinguishes whether the multimedia information whose input is accepted is (i) multimedia information that had been accepted during a period of time from when the predefined playback start condition was satisfied until when the playing back of the sending end video image information was over (this multimedia information being hereinafter referred to as "synchronous multimedia information") or (*ii*) multimedia information other than the synchronous multimedia information (this multimedia information being hereinafter referred to as "asynchronous multimedia information"). Then, the sending unit sequentially sends the multimedia information whose input is accepted to the receiving end terminal.
In terms of the foregoing example, the synchronous multimedia information is audio that represents a name assigned to the mortal blow or a signature phrase uttered by the game player in time with the bodily movement of the game character in the video image, during a period of time in which the video image of the mortal blow is being played back and displayed. On the other hand, the asynchronous multimedia information is audio that represents other than that represented by the synchronous multimedia information, for example, a daily conversation in a normal moving scene accomplished by audio chat.

On the other hand, in the receiving end terminal, the receiving unit sequentially receives multimedia information that are sequentially transmitted from the sending end terminal.
Typically, as to the multimedia information transmitted from the sending end terminal, a protocol of high speed transmission, for example, such as UDP (User Datagram Protocol), is employed. However, protocols other than UDP may be used.
In addition, the sending/receiving of multimedia information referred to here typically corresponds to the provision of multimedia information by means of streaming.

On the other hand, the receiving end video image playing-back unit starts the playing back of receiving end video image information when a predefined synchronous playback start condition is satisfied with respect to multimedia information received by the receiving unit.
In terms of the foregoing example, if the receiving side detects that a mortal blow is performed on the sending side, then the playing back of video image information representing that a game character on the opponent side is performing the mortal blow will be started. Generally, there exists a hardware time lag between the moment of detecting that, following the reception of asynchronous multimedia information, synchronous multimedia information is received and the moment when the playing back of video image information is actually started thereafter. In addition, it may be possible to prepare a software time lag, in other words, an allowance time longer than the hardware time lag is set to start a playback after waiting for the allowance time.

In addition, it is typical that the predefined synchronous playback start condition is satisfied if, following the receiving of asynchronous multimedia information, synchronous multimedia information is received.

On the other hand,
(p) when each of the sequentially received multimedia information is asynchronous multimedia information, then the multimedia information outputting unit sequentially outputs the respective asynchronous multimedia information and
(q) when each of the sequentially received multimedia information is synchronous multimedia information, then the multimedia information outputting unit buffers the respective synchronous multimedia information until the playing back of the receiving end video image information is started and then sequentially outputs the respective buffered synchronous multimedia information once the playing back of the receiving end video image information is started.

The foregoing (p) corresponds to a so-called audio or video chat. In such a circumstance that requires no special need to establish synchronization with the screen display, immediately upon the arrival of multimedia information (asynchronous multimedia information), this multimedia information is played back by means of streaming.
On the other hand, the foregoing (q) is for playing back multimedia information on the sending side in synchronization with the video image displaying of the mortal blow. As described above, there is, in addition to a network communication delay, a processing delay in the receiving end video image playing-back unit by the time that the video image displaying of the mortal blow is started.

Therefore, in order to compensate such a time lag, in the multimedia information outputting unit, synchronous multimedia information is buffered upon its arrival thereat and, when the playing back of receiving end video image information is started, each of the asynchronous multimedia information is sequentially read out from the buffer for streaming playback thereof.
In this way, in accordance with the present invention, it becomes possible that, in an online game capable of providing interactive communication by voice utterance between the game players, multimedia information (e.g., audio information representative of a voice uttered in synchronization with video image information by one of the game players and motion picture information as a result of shooting of the manner of a player's gestural movement) is output in synchronization with the video image information in a terminal on the side of the other game player.

An online game system in accordance with a second aspect of the present invention has a sending end terminal and a receiving end terminal. The online game system of the second aspect is configured as follows.

That is, the sending end terminal is provided with a manipulation input accepting unit, a multimedia information input accepting unit, a sending end video image playing-back unit, and a sending unit.

Here, the manipulation input accepting unit accepts a manipulation input from a user.
The manipulation input accepting unit is typically in the form of a keyboard or in the form of a controller. In terms of the foregoing example, if a manipulation made by depressing a key or button is the prefix of a mortal blow command (which is a start manipulation input), this satisfies a playback start condition and the animation displaying of the mortal blow is started.

On the other hand, the multimedia information input accepting unit accepts the input of multimedia information from the user.

Furthermore, if the accepted manipulated input is detected to be a predefined start manipulation input, then the sending end video image playing-back unit starts the playing back of sending end video image information.

In terms of the foregoing example, it takes a certain length of time to input a command for the mortal blow. In view of this, if the sequence of the mortal blow that was once started is input after the playing back of motion picture information was started, this is assumed that the inputting of the mortal blow command succeeds, thereby starting the playing back of sending end video image information.

And, the sending unit sequentially transmits information to the receiving end terminal. The type of such information includes start notification, multimedia information, or termination notification, and
(r) when the accepted manipulated input is detected to be a predefined start manipulation input, then the sending unit transmits a start notification to that effect to the receiving end terminal;
(s) when the inputting of the multimedia information is detected to have been accepted for a predefined length of time, then the sending unit, transmits the predefined length of time's multimedia information per such detection; and
(t) when the playing back of the sending end video image information is detected to be over, then the sending unit transmits a termination notification to that effect to the receiving end terminal.

It is typical to distinguish among these different types of information by padding a tag indicative of the type of information in a packet. In addition, it is typical that each packet is transmitted by UDP. Alternatively, it may be arranged such that multimedia information is transmitted in the form of a UDP packet while on the other hand start and terminal notifications are each transmitted in the form of a TCP packet, and these information and notifications are arranged in the order that they were received on the receiving side.

On the other hand, the receiving end terminal is provided with a receiving unit, a receiving end video image playing-back unit, and a multimedia information outputting unit.

Here, the receiving unit sequentially receives information that are sequentially transmitted from the sending end terminal.

Accordingly, various types of information including start notification, multimedia information, and termination notification are processed in order of their arrival time.

When information received by the receiving unit is detected to be the start notification, then the receiving end video image playing-back unit starts the playing back of receiving end video image information that is associated with the sending end video image information after a predefined allowance time has elapsed since the detection.

During the allowance time, multimedia information to be played back in synchronization with the receiving end video image is received and then buffered.

On the other hand, the multimedia information outputting unit determines that multimedia information that had sequentially been received during a period of time from when the receiving unit received the start notification until when the receiving unit received the termination notification are synchronous multimedia information, and in addition, determines that multimedia information that had sequentially been received during other than that period of time are asynchronous multimedia information. And,
(p) when each of the sequentially received information is determined to be asynchronous multimedia information, then the multimedia information outputting unit sequentially outputs the respective asynchronous multimedia information; and
(q) when each of the sequentially received information is determined to be synchronous multimedia information, then the multimedia information outputting unit buffers the respective synchronous multimedia information to a buffer region capable of buffering for a time equal to or longer than the predefined allowance time and then sequentially outputs the respective buffered synchronous multimedia information after the playing back of the receiving end video image information is started.

By the present invention, it becomes possible to provide a game in which the distinction of whether the received multimedia information is synchronous multimedia information or asynchronous multimedia information is properly made and the synchronous multimedia information is played back in synchronization with the playing back of video image information prepared on both the sending side and the receiving side and agreeing with each other.

In addition, the online game system of the present invention may be configured as follows.

That is, in the sending end terminal, the type of the information to be transmitted by the sending unit further includes playback stop information. And,
(x) the sending end video image playing-back unit stops and then terminates the playing back of the sending end video image information upon detecting that a predefined playback stop condition is satisfied, and
(y) the sending unit transmits, upon detecting that the predefined playback stop condition has been satisfied, playback stop information to that effect to the receiving end terminal.

For example, in the case where the sequence of a command input for a mortal blow of the game character is long, the playback start condition will be satisfied when part thereof is input. However, if identified to fail halfway, this is assumed that the playback stop condition is satisfied, and the playing back of motion picture information can be brought to a stop. Accordingly, any multimedia information that will be input after the stop is asynchronous multimedia information.
In addition, the playback stop information is transmitted also to the receiving end terminal. When multimedia information is being transmitted by UDP, it is preferable that the playback stop information, too, be transmitted at high speed by UDP; however, as to the playback stop information it may unfailingly be transmitted by means of TCP.

On the other hand, in the receiving end terminal, if information received by the receiving unit is detected to be the playback stop information, the multimedia information outputting unit erases the buffered synchronous multimedia information and then stops the outputting of multimedia information that had sequentially been received during a period of time from when the playback stop information was received until when the termination notification was received.
Consequently, when the playback stop information is received, the outputting of synchronous multimedia information that had been buffered until then is not carried out. In addition, the same is applied to the synchronous multimedia information that had been received thereafter.

In accordance with the present invention, in the case where the playing back of video image information happens to be interrupted halfway, the synchronous multimedia information to be played back in synchronization with the playing back of video image information is ignored, thereby making it possible to rapidly return to an audio chat or the like.

In addition, it can be configured such that the predefined playback stop condition is satisfied in the sending end terminal of the online game system in accordance with the present invention if the accepted manipulated input fails to match a predefined manipulation input pattern within a predetermined grace time after the predefined playback start condition was satisfied.
As in the foregoing example, in the case where a mortal blow command is entered by a manipulation of depressing a certain key(s) of the keyboard or a certain button(s) of the controller, the video image playback is continued as it is to thereby proceed with the sequence of the mortal blow if the string of the depressing manipulation that is associated with the mortal blow command is completely input within a predefined grace time, otherwise the sequence of the mortal blow is interrupted halfway. If the playback stop condition is satisfied, this terminates the playing back of motion picture information, and as a result, the multimedia information also changes from synchronous input to asynchronous input.

The present invention relates to a preferred embodiment of the foregoing invention. In accordance with the present invention, it becomes possible to accept a manipulation input by means of a keyboard, a controller, or the like and provide, based on the accepted manipulated input, control so that the playing back of motion picture information can be stopped, terminated, or continued.

In addition, it can be configured such that the predefined playback stop condition is satisfied in the sending end terminal of the online game system in accordance with the present invention if the input-accepted multimedia information fails to fulfill a predefined multimedial characteristic within a predefined grace time after the predefined playback start condition was satisfied.
As in the foregoing example, if, after the playing back of motion picture information relating to a mortal blow was started, either a voice that is associated with a command for the mortal blow is completely input or the motion of the mortal blow is made accurately, the video image playback is continued as it is to thereby proceed with the sequence of the mortal blow, otherwise the sequence of the mortal blow is interrupted halfway. If the playback stop condition is satisfied, this terminates the playing back of motion picture information, and as a result, the audio information changes from synchronous input to asynchronous input.

Here, the predefined multimedial characteristic for the case of audio is characterized by the loudness of voice, the tone, rhythm, and scale of voice or a combination thereof. In addition, it is possible to vary, based on these phonetic characteristics, the strength level of offence-side power of the mortal blow and the strength level of defensive power. For example, if a name assigned to the mortal blow or a signature phrase is loudly uttered with the rhythm in time with the motion picture, this boosts the level of strength of the mortal blow.

In addition, the predefined multimedial characteristic for the case of motion picture is determined as follows: that is, a hand or body gesture is first shot and then the predefined multimedial characteristic is determined by whether such a shot gesture agrees with a predefined pattern of movement.
The present invention relates to a preferred embodiment of the foregoing invention. In accordance with the present invention, it becomes possible to accept the input of multimedia information (e.g., audio information) and provide, based on the input of the multimedia information, control so that the playing back of motion picture information can be stopped, terminated, or continued.

In addition, in the receiving end terminal of the online game system of the preset invention, the multimedia information outputting unit can be configured such that it buffers the synchronous multimedia information for a longer length of time than the predefined grace time.
In the aforesaid example, when it is proved that a command input for the mortal blow succeeds or fails, there is still room in the buffer for buffering. That is, this buffer length is in agreement with the foregoing allowance time. Hence it is not until it is determined that the command input for the mortal blow has succeeded that the playing back of receiving end video image information is started.

The present invention relates to a preferred embodiment of the foregoing invention and the buffer length is properly set thereby making it possible to efficiently perform buffering.

An online game control method according to another aspect of the present invention is executed in a receiving end terminal having a manipulation input accepting unit, a multimedia information input accepting unit, a sending end video image playing-back unit, and a sending unit as well as in a receiving end terminal having a receiving unit, a receiving end video image playing-back unit, and a multimedia information outputting unit. This online game control method is configured as follows.

In the first place, in the sending end terminal: (i) in a manipulation input accepting step, the manipulation input accepting unit accepts a manipulation input from a user; (*ii*) in a multimedia information input accepting step, the multimedia information input accepting unit accepts the input of multimedia information from the user; (*iii*) in a sending end video image playing-back step, the sending end video image playing-back unit starts the playing back of sending end video image information when the accepted manipulated input is detected to be a predefined start manipulation input; and (*iv*) in a sending step, the sending unit (304) sequentially transmits information, the type of which includes start notification, multimedia information, or termination notification, to the receiving end terminal (401), wherein
(r) when the accepted manipulated input is detected to a predefined start manipulation input, then the sending unit transmits a start notification to that effect;
(s) if the inputting of the multimedia information is detected to have been accepted for a predefined period of time, then the sending unit transmits the predefined period of time's multimedia information per such detection; and
(t) when the playing back of the sending end video image information is detected to be over, then the sending unit transmits a termination notification to that effect.

On the other hand, in the receiving end terminal: (i) in a receiving step, the receiving unit sequentially receives information that are sequentially transmitted from the sending end terminal; (*ii*) in a receiving end video playing-back step, if information received in the receiving step is detected to be the start notification, then the receiving end video image playing-back unit starts the playing back of receiving end video image information that is associated with the sending end video image information after a predefined allowance time has elapsed since the detection; and (iii) in a multimedia information outputting step, multimedia information that had sequentially been received during a period of time from when the start notification was received in the receiving step until when the termination notification was received in the receiving step are determined to be synchronous multimedia information, and that multimedia information that had sequentially been received during other than that period of time are determined to be asynchronous multimedia information, wherein
(p) when each of the sequentially received information is determined to be asynchronous multimedia information, then the multimedia information outputting step sequentially outputs the respective asynchronous multimedia information and
(q) when each of the sequentially received information is determined to be synchronous multimedia information, then the multimedia information outputting step buffers the respective synchronous multimedia information to a buffer region capable of buffering thereof for a longer length of time than the predefined allowance time and then sequentially outputs the respective buffered synchronous multimedia information after the playing back of the receiving end video image information is started.

A program relating to another aspect of the present invention is configured such that a first computer is made to function as the respective units of the aforesaid sending end terminal whereas a second computer is made to function as the respective units of the aforesaid receiving end terminal.

In addition, the program of the present invention can be recorded on a computer readable information recording medium, for example, such as compact disk, flexible disk, hard disk, magnet-optical disk, digital video disk, magnetic tape, and semiconductor memory.
The foregoing program can be distributed or sold over a computer communication network separately from the computer on which the program is executed. In addition, the foregoing information recording medium can be distributed or sold separately from the computer.

### EFFECT OF INVENTION

The present invention provides: an online game system and an online game control method, which are suitable for use in an online game, allowing mutual conversation by voice utterance between game players in which multimedia information is output in synchronization with video image information in a terminal on the side of the other game player, and the present invention provides a computer readable information recording medium on which is recorded a program that implements such an online game system and such an online game control method by a computer, and the program.

### BRIEF DESCRIPTION OF DRAWINGS

FIG. 1 is a schematic diagram illustrating a general configuration of a typical information processing device that is made to function as either a sending end terminal or a receiving end terminal according to the present invention by the execution of a program;
FIG. 2 is a schematic diagram illustrating a general configuration of an online game system in accordance with an embodiment of the present invention;
FIG. 3 is a schematic diagram illustrating a general configuration of the sending end terminal;
FIG. 4 is a diagram intended for explaining the relationship in terms of time between the mortal blow command employed in the embodiment and the motion picture playback;
FIG. 5 is a flowchart representing the flow of control of a sending end processing that is executed in the sending end terminal;
FIG. 6 is a schematic diagram illustrating a general configuration of the receiving end terminal of the online game system in accordance with the present embodiment;
FIG. 7 is a flowchart representing the flow of control of a first receiving processing that is executed in the receiving end terminal; and
FIG. 8 is a flowchart representing the flow of control of a second receiving processing that is activated in the receiving end terminal.

### DESCRIPTION OF REFERENCE NUMERALS

- 100: Information processing device
- 101: CPU
- 102: ROM
- 103: RAM
- 104: Interface
- 105: Controller
- 106: External memory
- 107: Image processor
- 108: DVD-ROM drive
- 109: NIC
- 110: Audio processor
- 111: Microphone
- 201: Online game system
- 251: Internet
- 301: Sending end terminal
- 302: Audio input accepting unit
- 303: Sending end video image playing-back unit
- 304: Sending unit
- 401: Receiving end terminal
- 402: Receiving unit
- 403: Receiving end video image playing-back unit
- 404: Audio outputting unit
- 411: Internal buffer
- 412: External buffer

### Best Mode For Carrying Out the Invention

The manner of embodying the present invention will be described hereinbelow. While, for the sake of facilitating understanding of the present invention, the following will describe the present invention in terms of an embodiment thereof that realizes the present invention using an information processing device configured for use in game play, the embodiment to be hereinafter described is given by way of illustration only, and thus is not in any way limitative of the scope of the present invention. It would be apparent for those skilled in the art to be able to employ embodiments that replace each or every element of the present invention with its or their equivalents. Such embodiments are, however, also encompassed in the scope of the invention.

The following exemplary embodiment will be described assuming a player-versus-player game that utilizes an audio chat in which audio information is utilized as multimedia information. In view of this, hereinafter, description will be made in terms of an example that employs only "audio information" as "multimedia information". However, the same principle is applicable to the case of employing motion picture information (e.g., a video chat or the like) as "multimedia information" and such manners are also encompassed within the scope of the invention.

### Embodiment 1

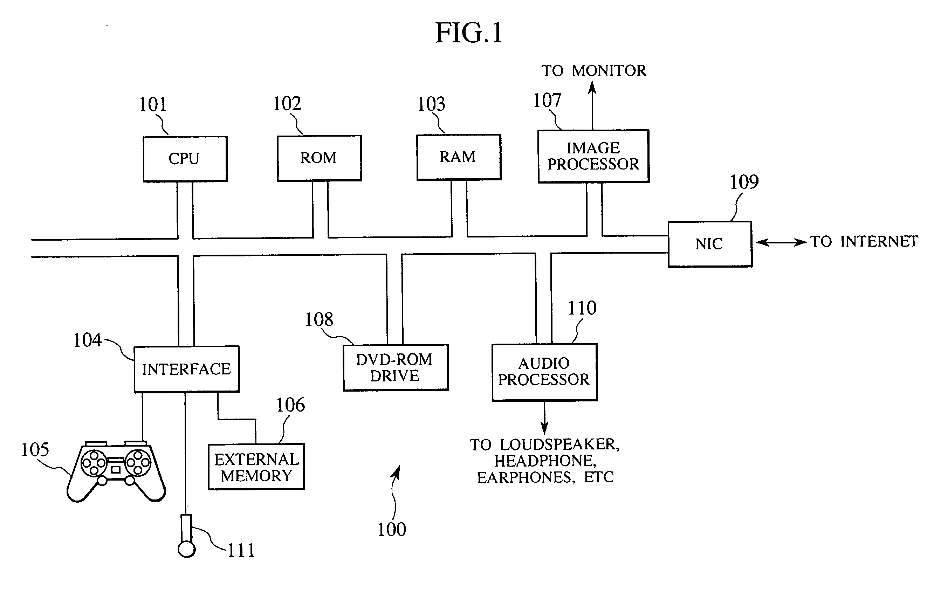

Referring first to FIG. 1, there is shown a schematic diagram depicting a general configuration of a typical information processing device which is configured such that it is made to function as either a sending end terminal or a receiving end terminal of the present invention by the execution of a program. Hereinafter, description will be made with reference to the accompanying drawings.

An information processing device 100 is made up of a CPU (Central Processing Unit) 101, a ROM 102, a RAM (Random Access Memory) 103, an interface 104, a controller 105, an external memory 106, an image processor 107, a DVD-ROM (Digital Versatile Disc ROM) drive 108, an NIC (network interface card) 109, and an audio processor 110.

With a DVD-ROM, on which is stored a program and data for game play, inserted in the DVD-ROM drive 108, the information processing device 100 is powered on, whereby the program is executed. As a result, either the sending end terminal or the receiving end terminal of the present embodiment is implemented.

The CPU 101 controls the entire operation of the information processing device 100, and is connected to each of the components for the exchange of control signals and data therebetween. Besides, with the aid of an ALU (Arithmetic Logic Unit) (not shown), the CPU 101 can perform, on a register (not shown) that is a storage area capable of being accessed at high speed, arithmetic operations (e.g., addition, subtraction, multiplication, division et cetera), logical operations (e.g., logical addition, logical multiplication, logical negotiation et cetera), and bit operations (e.g., bit addition, bit multiplication, bit inversion, bit shift, bit rotation et cetera). Furthermore, in some cases, the CPU 101 itself is architected such that it can perform at high speed saturate operations (e.g., addition, subtraction, multiplication, division et cetera), vector operations (e.g., trigonometric function), and other similar operations for coping with multimedia processing. Alternatively, the CPU 101 may be implemented incorporating therein a coprocessor.

An IPL (Initial Program Loader) that is executed immediately after power-on is recorded on the ROM 102. By the execution of the IPL, the program recorded on the DVD-ROM is read out to the RAM 103. Then, the CPU 101 starts executing the program. In addition, the ROM 102 stores programs and various data for the operating system necessary for controlling the entire operation of the entire information processing device 100.

The RAM 103 is to temporarily store data and programs, and retains, in addition to programs and data read out of the DVD-ROM, any other type of data necessary for game progression and chat communication. On the other hand, the CPU 101 performs processing such as: providing a variable area in the RAM 103 and then causing the ALU to operate directly on the value stored in the variable area to thereby perform arithmetic operations; and performing arithmetic operations on the register after temporarily storing the value stored in the RAM 103 in the register and then writing back the result of the arithmetic operations to the memory.

The controller 105 connected via the interface 104 is configured to accept a manipulation input entered by the user executing a game.

The external memory 106 detachably connected via the interface 104 stores various data in a rewritable manner, namely data indicative of a play status (e.g., a previous game result) of the game, data indicative of a state of progress of the game, and data about a chat communication log (record) in a network player-versus-player game. The user can enter his/her instruction via the controller 105 to thereby record the data in the external memory 106 as necessary.

The program for implementing the game, and the video image data and the audio data both of which are attendant on the game are recorded on the DVD-ROM inserted into the DVD-ROM drive 108. Under the control of the CPU 101, the DVD-ROM drive 108 performs readout operation on the inserted DVD-ROM to thereby read out therefrom a necessary program and data. The program and data thus read out are temporarily stored in the RAM 103 or other memory.

The image processor 107 processes data, read out from the DVD-ROM, by means of the CPU 101 and an image arithmetic processor (not shown) provided in the image processor 107, and then records the processed data in a frame memory (not shown) provided in the image processor 107. The video image information recorded in the frame memory is converted into a video signal at a predefined synchronizing timing, which video signal is then output to a monitor (not shown) connected to the image processor 107. This makes it possible to display various images.

The image arithmetic processor can execute at high speed an overlay operation of the 2-D images, a transparent operation such as α blending, and various types of saturate operations.

In addition, the image arithmetic processor can execute at high speed an arithmetic operation of rendering, by a Z buffer method, polygon information arranged in a virtual 3-D space and having addition thereto of various texture information, thereby obtaining a rendering image which provides the overhead view of a polygon arranged in the virtual 3-D space, as viewed from a predefined viewpoint in the direction of a predefined line of sight.

Further, the coordinated operation of the CPU 101 and the image arithmetic processor makes it possible to draw to either the frame memory or each surface of the polygon a string of characters in the form of a 2-D image according to the font information that defines the shape of each character.

The NIC 109 is to establish connection of the information processing device 100 to a computer communications network (not shown), e.g., the Internet. The NIC 109 can be implemented by any network interface card that complies with the 10 BASE-T/100 BASE-T standards for use in establishing a LAN (Local Area Network). Alternatively, the NIC 109 can be made up of a modem (such as an analog modem for establishing connection to the Internet by telephone lines, an ISDN (Integrated Services Digital Network) modem, an ADSL (Asymmetric Digital Subscriber Line) modem, a cable modem for establishing connection to the Internet by using a cable television circuit) and an interface (not shown) for establishing interconnection between the modem and the CPU 101.

The audio processor 110 is configured such that it converts audio data read out from the DVD-ROM into an analog audio signal, which analog audio signal is output from a loudspeaker (not shown) connected to the audio processor 110. The audio processor 110 generates, under the control of the CPU 101, data for audio effects to be made during the progression of the game and music data. Audio corresponding to these generated data is output from the loudspeaker.

If the audio data recorded on the DVD-ROM is MIDI data, the audio processor 110 makes reference to the sound source data contained in the MIDI data for converting the MIDI data into PCM data. On the other hand, if the audio data is in the form of already-compressed audio data in ADPCM format, Ogg Vorbis format, or other like format, the audio processor 110 decompresses and converts the audio data into PCM data. By subjecting PCM data to D/A (Digital/Analog) conversion at a timing in accordance with its sampling frequency and then feeding the converted PCM data to the loudspeaker, it can audibly be output from the loudspeaker.

Additionally, a microphone 111 can be connected through the interface 104 to the information processing device 100. In this case, A/D conversion is performed on an analog signal from the microphone 111 at a suitable sampling frequency for conversion into a digital signal in PCM format so that it becomes ready for processing in the audio processor 110, such as mixing.

In addition, the information processing device 100 can be configured to incorporate therein a large capacity external storage device such as a hard disk storage that accomplishes the same functions as do the ROM 102, the RAM 103, the external memory 106, the DVD-ROM inserted in the DVD-ROM drive 108 et cetera.

Although the information processing device 100 described above corresponds to a so-called "consumer TV game device", the present invention is available for any other type of device as long as it is able to perform audio processing and video image processing. Therefore, the present invention can be carried out in various computers such as cellular phones, portable game devices, karaoke systems, and general computers for business use.

For example, a common computer, like the information processing device 100, includes a CPU, a RAM, a ROM, a DVD-ROM drive, an NIC, a microphone for the input of audio data, and a loudspeaker for the output of audio data. Such a computer also has an image processor with simplified functions relative to the information processing device 100 and a hard disk serving as an external storage device, and is configured so as to be able to use a flexible disk, a magnet-optical disk, a magnet tape et cetera. In addition, instead of the controller 105, a keyboard, a mouse, or something similar can be used as an input device.

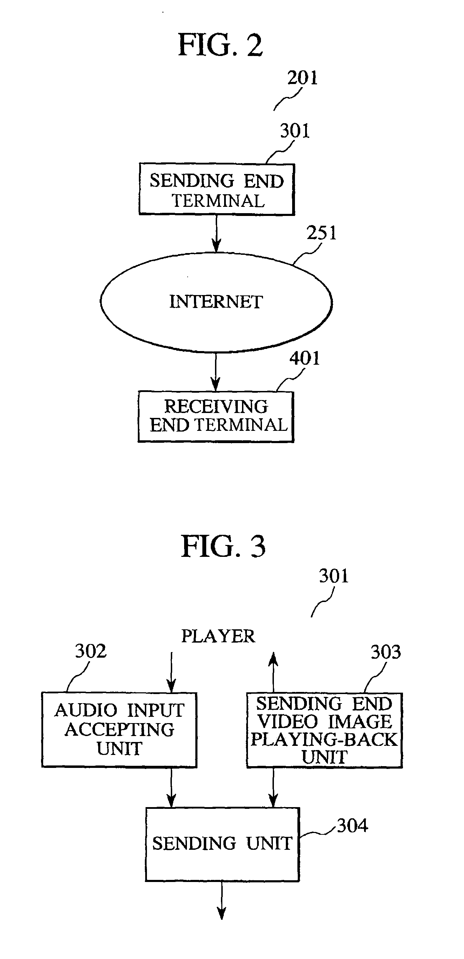

Referring now to FIG. 2, there is shown a schematic diagram illustrating the general configuration of an online game system formed in accordance with the embodiment of the present invention. Hereinafter, description will be made by making reference to the figure.
As shown in the figure, the online game system 201 has a sending end terminal 301 and a receiving end terminal 401 which are connected together so that they can communicate with each other through an Internet connection 251. The sending end terminal 301 and the receiving end terminal 401 are each implemented by the execution of an online game program in the information processing device 100.
It is typical that each information processing device 100 is configured such that it functions selectively as the sending end terminal 301 or as the receiving end terminal 401.

Typically, high-speed UDP for use in the streaming distribution of audio information is employed for establishing communications between the sending end terminal 301 and the receiving end terminal 401. However, protocols that employ receipt acknowledgement, for example, such as TCP, may be employed. In addition, different protocols and communication layers may be employed depending on the type of information to be transmitted.

In the following description, an exemplary case of the game is explained, in which case one of the information processing devices 100 (which is operated by a game player who is about to carry out an attack with a mortal blow) serves as the sending end terminal 301 whereas the other information processing device 100 (which is operated by the other game player who waits and sees how the mortal blow attack will be performed) serves as the receiving end terminal 401. Furthermore, the bodily movement, action, special-effect rendition et cetera of a game character who is manipulated by the offence-side game player at the time when the mortal blow is performed, is visually displayed by animation or 3-D polygon graphics in both of the sending end terminal 301 and the receiving end terminal 401.

In the present embodiment, as will be described later, the offence-side game player calls out, in synchronization with the video image display of a mortal blow, a name assigned to the mortal blow or a signature phrase and the information to that effect is provided to the other game player. This makes it possible to utilize an audio chat in such a situation that the mortal blow that boosts the degree of absorption-into-game of the game players is not displayed. It should be noted that the principle of the present invention is applicable to other embodiments and that such other embodiments are also covered within the scope of the present invention.

(SENDING END TERMINAL)
FIG. 3 is a schematic diagram illustrating the general configuration of the sending end terminal 301. Hereinafter, description will be made with reference to the figure.
The sending end terminal 301 of the present embodiment has an audio input accepting unit 302, a sending end video image playing-back unit 303, and a sending unit 304.

In the first place, in the sending end terminal 301, the audio input accepting unit 302 accepts the input of audio information.
A voice uttered by the game player using the sending end terminal 301 is acquired by means of the microphone 111. The audio information thus obtained is buffered to an internal buffer provided in the audio processor 110 or to the RAM 103.

In a typical audio sampling process, a timer interruption is made iteratively at the interval of a sampling cycle; the displacement (which is a deviation from a reference position) of an audio input from the microphone 111 is obtained in the interruption handler of the timer interruption; and digital data of the obtained displacement is added to a predefined buffer prepared in the RAM 103 or the like.
This produces the requirement that the processing, in which data is read out in queue format from within the buffer at a cycle corresponding to the time during which audio information can be stored in the length of the buffer, be carried out concurrently.

On the other hand, the sending end video image playing-back unit 303 starts the playing back of sending end video image information if a predefined playback start condition is satisfied.
In terms of the foregoing example, if the playback start condition is satisfied when a command as to direct a game character to perform a mortal blow is input by the controller 105 or by a voice, the video image of the mortal blow to be performed by the game character is displayed on the screen.

Here, the above video image display is typically implemented by playing back a motion picture file prepared in advance. That is, a motion picture video image file (which may contain audio information) in AVI (Audio Video Interleaving) format or MPEG (Moving Picture Experts Group) is previously recorded on the DVD-ROM. It is typical that the same motion picture video image file is previously prepared in both the sending end terminal 301 and the receiving end terminal 401; however, different motion picture video image files can be employed if they have a substantially same playback time with each other.
In this case, the information contained in the motion picture video image serves as sending end video image information (and receiving end video image information).

In addition, it may be possible to employ such a manner that video image information is dynamically generated. Alternatively, it may be arranged such that the bony-framework movement of the game character along the elapse of time corresponding to the mortal blow is defined in advance and, in accordance with this definition, the position of the bony framework of the game character may be varied to update the polygon information as to the exterior appearance of the game character to thereby provide a 3-D graphics display.
In this case, the game character's bony framework positional relationship in virtual space and the variation itself with time in position of the game character in virtual space become sending end video information (and receiving end video image information).

When a situation in the virtual world is being displayed at both ends (i.e., the sending end terminal 301 and the receiving end terminal 401), the eye point position/eye gaze direction at the time when the virtual world is represented in the form of 3-D graphics generally differs between the sending end terminal 301 and the receiving end terminal 401.

The sending unit 304 sequentially transmits the following information to the receiving end terminal 401:
(a) a notification to the effect that a predefined playback start condition is satisfied (hereinafter referred to as "start notification");
(b) audio information for a predefined length of time input from the audio input accepting unit 302;
(c) a notification to the effect that a predefined playback stop condition is satisfied (hereinafter referred to as "stop notification"); and
(d) a notification to the effect that the playing back of video image information is over (hereinafter referred to as "termination notification"). Each information (a), (b), (c), and (d) will be transmitted as soon as the occurrence of its associated event is detected in the sending end terminal 301.

Accordingly, the audio information transmitted during a period of time from the start notification until either the stop notification or the termination notification is audio information input during a period of time from when a predetermined start condition is satisfied until when the playing back of the sending end video image information is over. This audio information is hereinafter referred to as "synchronous audio information whereas the audio information accepted during other than that period of time is referred to as "asynchronous audio information".

In terms of the foregoing example, the synchronous audio information is audio that represents, when the video image of a mortal blow is being played back and displayed, either a name assigned to the mortal blow uttered by the game player in time with the bodily movement of a game character or a signature phrase. The asynchronous audio information is audio other than the above that represents an audio chat in a daily conversation, for example, in a normal moving scene.

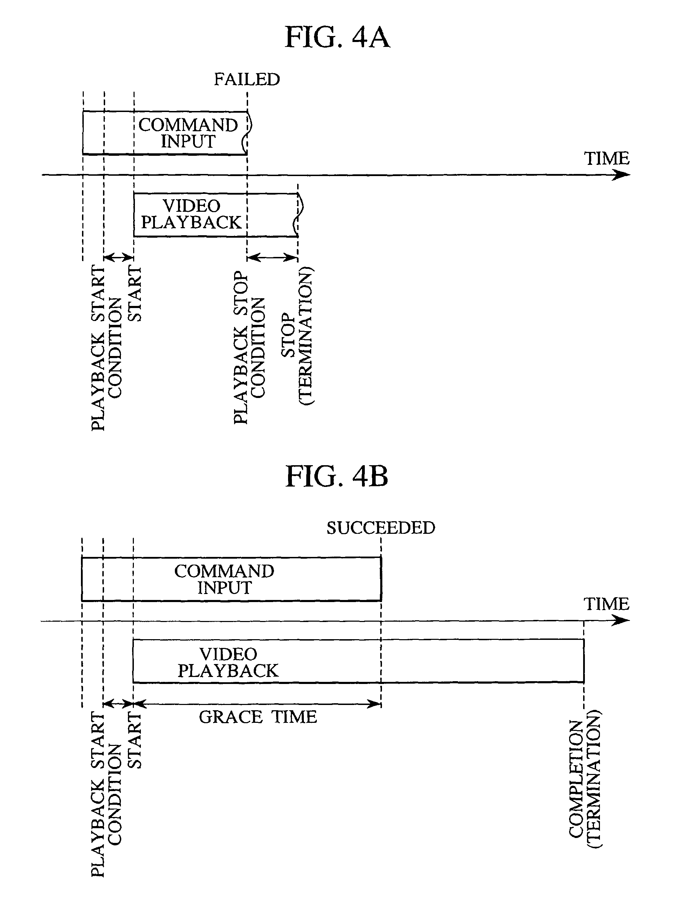

Referring now to FIG. 4, there is shown a diagram intended for explaining the relationship in terms of time between the mortal blow command employed in the present embodiment and the motion picture playback. Hereinafter, description will be made with reference to the figure.

In the present embodiment, it takes a certain length of time to complete the input of a command for the mortal blow. To cope with this, it is taken that the playback start condition is satisfied if, in the sending end terminal 301, there is created a situation that allows a prediction that the input of a command for the mortal blow has started to be made.

As a situation that allows a prediction that the input of a command for the mortal blow has started to be made, the following are possible situations.
(a) In the case where the mortal blow command is entered by performing a manipulation of depressing specific keys or buttons of the controller 105 in a predefined sequence, such a situation is created if the leading portion (prefix) of the sequence of the depressing operation is entered to some extent.
(b) In the case where the mortal blow command is entered by the input of a voice (that is, the game player chants a spell having a certain length), such a situation is created if an audio input corresponding to the leading portion of the spell is detected.
(c) In the case of the combination of (a) and (b), for example, in the case where a mortal blow preparatory mode is entered by a manipulation of depressing certain keys or buttons and thereafter the mortal blow command is completed by a predefined voice uttered by the game player, such a situation is created if the sending end terminal 301 enters such a mortal blow preparatory mode.

In addition, for the case of an embodiment that utilizes the controller 105 or the like, the controller 105 functions as a manipulation input accepting unit (not shown in Figure 3) of the sending end terminal 301.

Now, if the playback start condition is satisfied, the CPU 101 issues instructions to the image processor 107, audio processor 110 and to the DVD-ROM drive 108 so that the playing back of sending end video image information is started. Generally, there is a certain time lag between when the playback start condition is satisfied and when the playback of sending end video image information is started.

If, after the playback start condition was satisfied, the remaining command fails to be input properly during a predefined grace time, then the mortal blow command will not be completed. Upon detecting that the mortal blow command has failed, the CPU 101 issues an instruction to the image processor 107, to the audio processor 110, and to the DVD-ROM 108 so that the playback of sending end video image information is stopped. There is also a certain time lag until the time that the playback of sending end video image information is terminated in response to the instruction (see Figure 4(a)).

On the other hand, if, after the playback start condition was satisfied, the remaining command is input properly, then the mortal blow command is completed. Therefore, the sending end video image information will be played continuously to the end (see Figure 4(b)).

In addition, it may be arranged such that, during the playing back of sending end video image information, the audio processor 110 performs mixing of audio information input from the microphone 111 with audio contained in the motion picture file of the sending end video image information and then outputs a mixture. In this case, it becomes possible to provide a realistic sensation to the game player himself or herself who is about to do a mortal blow while simultaneously providing a criterion for whether being synchronized or not.

The processing unit time of each of these processes is determined in concert with the unit time allocated to the command input of the game. For example, in the case where the detection of the command input is in 1/60 second which is a vertical synchronizing signal cycle, preferably the criterion for these conditions agrees with the vertical synchronizing signal cycle or is the time as a result of dividing the vertical synchronizing signal cycle by an integer number. Hereinbelow, description will be made in terms of the case where the criterion corresponds to the vertical synchronizing signal cycle. However, it is possible to perform these decision processes and issue an instruction to each unit by timer interruption.

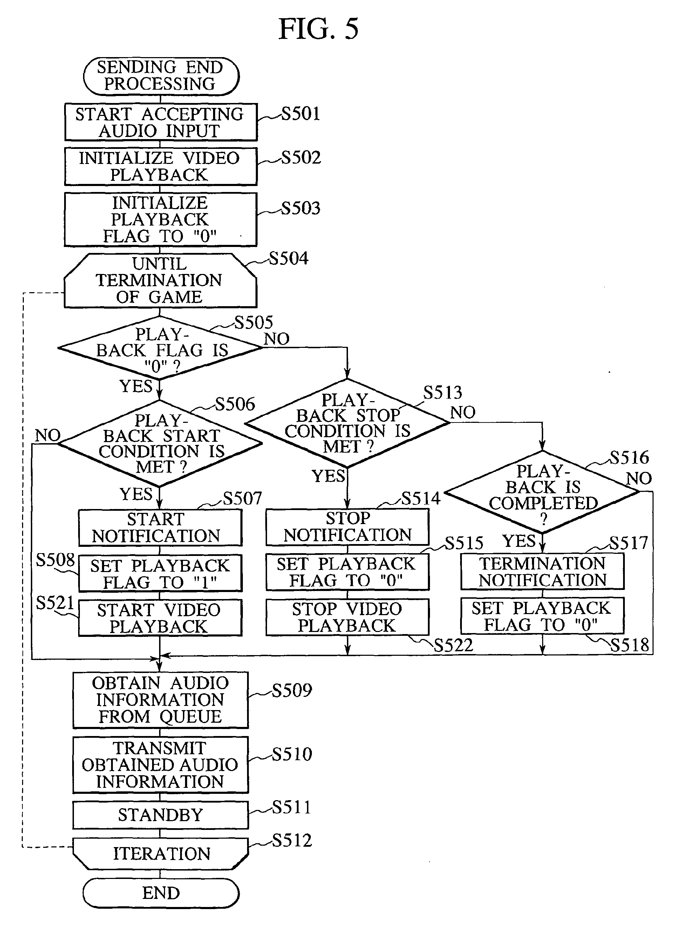

Referring now to Figure 5, there is shown a flowchart representing the flow of controlling sending end processing that is executed in the sending end terminal 301, the description of which will be made below with reference to the figure.

When this processing starts, the CPU 101 first controls the microphone 111 so that the microphone 111 starts accepting the input of audio information about a voice that is uttered by the game player (step S501). As described above, when the acceptance of the input of audio information commences, a process of storing in a queue format the most recent audio information in a buffer prepared in the RAM 103 or the like is started concurrently. To cope with this, it is required that audio information be acquired from the buffer at a proper timing to clear the capacity of the buffer.
Accordingly, under the control of the CPU 101, the microphone 111 functions as the audio input accepting unit 302.

Next, the CPU 101 controls the DVD-ROM drive 108 and the image processor 107, to thereby perform initialization so that the playing back of sending end video image information is started by an instruction from the CPU 101 (step S502).

This provides that the start/stop of the playing back of sending end video image information is carried out under the control of the CPU 101, and the DVD-ROM drive 108 and the image processor 107 function as the sending end video image playing-back unit 303.

Subsequently, the CPU 101 initializes a playback flag region prepared in the RAM 103 to "0" (step S503). If the playback flag region is "non-0", it means that the instruction issued lastly to the sending end video image playing-back unit 303 is to start playback. On the other hand, if the playback flag region is "0", this means that the instruction issued lastly to the sending end video image playing-back unit 303 is to stop playback.

Then, the CPU 101 repeats the following processing until the game is over (step S504).

That is, a check is made on whether the playback flag region is "0" or not (step S505). If found to be "0" (i.e., "YES" for step S505), then a check is made on whether the playback start condition is satisfied or not (step S506). Whether the playback start condition is satisfied or not is determined based on the criterion as described above. For example, it is possible to employ such a method in which, at an interruption caused every time a key/button is depressed, the latest information about the depressed key/button is accumulated and the CPU 101 scans the information to make a decision.

If the playback start condition is not satisfied (i.e., "NO" for step S506), then the control procedure advances to step S509.
On the other hand, if the playback start condition is satisfied (i.e., "YES" for step S506), the CPU 101 transmits a start notification to the receiving end terminal 401 via the NIC 109 (step S507) and then sets "1" to the playback flag region (step S508).

Subsequently, the CPU 101 provides control to instruct the DVD-ROM drive 108 and the image processor 107 to start the playing back of sending end video image information (step S521). Accordingly, the DVD-ROM drive 108 and the image processor 107 function, under the control of the CPU 101, as the sending end video image playing-back unit 303.

Then, the CPU 101 acquires audio information acquired from a queue of audio input to the RAM 103 or the like from the microphone 111 (step S509). Consequently, the buffer in the RAM 103 that constitutes the queue becomes empty for a moment.

Then, the audio information thus acquired from the queue is transmitted through the NIC 109 to the receiving end terminal 401 (step 5510). Although, in the present embodiment, additional information (indicative of whether the audio information is synchronous audio information or asynchronous audio information) is not given to a packet of audio information itself, it is also possible to employ an embodiment in which such information is given thereto.

Then, after standby until the occurrence of a vertical synchronizing interruption (step S511), a determination is made on whether the game is over or not (step S512). If determined that the game is over, then the processing is terminated (step S512). On the other hand, if determined that the game is not over, then the control procedure returns back to step S504 (step S512).

On the other hand, if the playback flag region is "non-0" (i.e., "NO" for step 505), a check is made on whether the playback stop condition is satisfied or not (step S513). If the playback stop condition is satisfied (i.e., "YES" for step S513), then the CPU 101 transmits a stop notification to the receiving end terminal 401 (step S514), sets "0" to the playback flag region (step S515), and issues such an instruction to the sending end video image playing-back unit 303 that the playback is brought to a stop (step S522), and the control procedure advances to step S509.

On the other hand, if the playback stop condition is not satisfied (i.e., "NO" for step S513), then a decision is made on whether the playing back of sending end video image information by the sending end video image playing-back unit 303 has been conducted completely to the end (step S516). If determined that the playback is terminated after having being conducted completely to the end (i.e., "YES" for step S516), then a termination notification is transmitted to the receiving end terminal 401 (step S517) and "0" is set to the playback flag region (step S518), and the control procedure advances to step S509.
If the playing back of sending end video image information is still in process (i.e., "NO" for step S516), the control procedure moves directly to step S509.

Because of the execution of such processing, the NIC 109 functions, under the control of the CPU 101, as the sending unit 304.

In addition, it is possible to omit making any check for the playback stop condition depending on the class of commands. Stated another way, once the mortal blow is started, the video image information is, as it is, played back to the end. In this case, it may be arranged such that parameters such as the level of strength of the mortal blow is determined based on the phonetic characteristic of the synchronous audio information.

It is to be noted that, although such an embodiment that the processing is repeated per vertical synchronizing cycle is employed in the foregoing description, another processing can co routinely be executed during the standby in step S511. In addition, it may be arranged such that a wait for vertical synch is not carried out as it is, but a single iteration loop of the present processing is set to the interruption handler of the timer interruption and iteration is carried out at a predetermined time interval.
Other than this, in the case where the OS (Operating System) employed in the information processing device 100 adopts time sharing processing using a thread, it can be divided into a plurality of threads for each processing type as will be described later whereby the processing is organized.

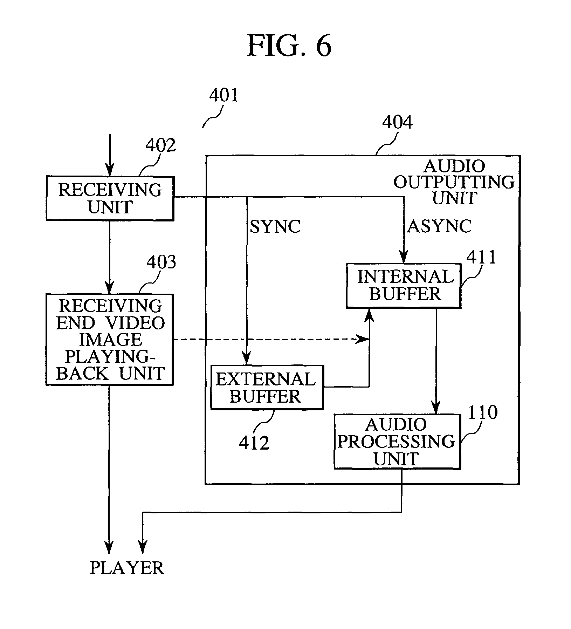

(RECEIVING END TERMINAL)
Referring to Figure 6, there is shown a schematic diagram illustrating a general configuration of the receiving end terminal 401 of the online game system in accordance with the present embodiment, the description of which will be made with reference to the figure.
As shown in the figure, the receiving end terminal 401 has a receiving unit 402, a receiving end video information playing-back unit 403, and an audio outputting unit 404.

Here, the receiving unit 402 receives audio information, start notification, stop notification, and termination notification all of which are transmitted from the sending end terminal 301 on the basis of a predefined protocol.

On the other hand, if the playing back of sending end video image information is started or stopped in the sending end terminal 301, then the receiving end video image playing-back unit 403, in time with this (although there is a time lag), starts or stops the playing back of receiving end video image information.

In addition, the audio outputting unit 404 properly outputs the received audio information whereby the game player who is operating the receiving end terminal 401 is provided with an audio chat by a player's voice and a player's voice representing an attack technique's name or a signature phrase in synchronization with the playing back of receiving end video image information.

In the receiving end terminal 401, a first receive processing and a second receive processing are executed concurrently with each other. This concurrent processing execution is implemented by making use of various functions such as thread, time sharing, coroutine, interruption et cetera a detailed description is provided below with reference to the drawing.

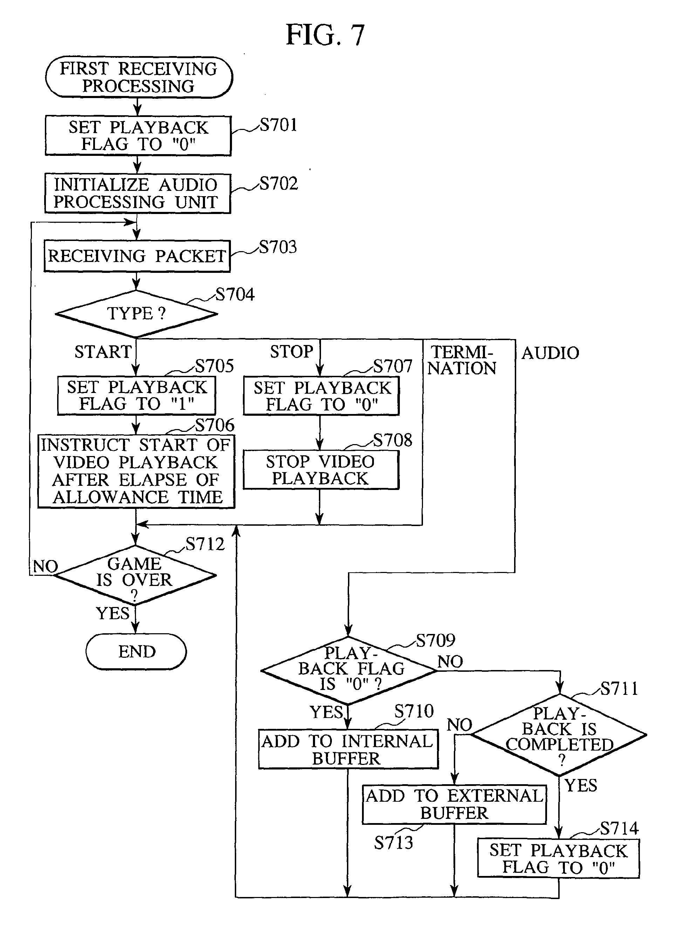

Referring to FIG. 7, there is shown a flowchart representing a flow of controlling the first receive processing that is executed in the receiving end terminal 401, the description of which will be made with reference to the figure.

Upon the starting up of the processing, the CPU 101 sets a playback flag region prepared in the RAM 103 to "0" (step S701). This playback flag region is identical in function with the playback flag region in the sending end terminal 301.

Subsequently, the audio processor 110 is initialized. Then, audio information are passed to the audio processor 110 so that they are played back in the order that they were passed to the audio processor 110 (step S702). That is, the audio processor 110 is associated with an internal buffer 411 prepared in the RAM 103. When audio information is designated from the CPU 101, the internal buffer 411 stores the designated audio information.

The audio processor 110 retrieves audio information from the top of the internal buffer 411 and then audibly outputs the retrieved audio information, after completion of which the audio processor 110 retrieves the next audio information and then audibly outputs the retrieved audio information. This series of operations is iteratively carried out. In the case where the receiving end video image information contains therein audio information, it may be arranged such that the audio processor 110 gives its audio output after the mixing of the video image information and the audio information.
In addition, an external buffer 412 that is used for buffering to be hereinafter described and the internal buffer 411 belong to different functions.

Next, the CPU 101 monitors the NIC 109 and waits until the time that a packet that designates various information arrives from the sending end terminal and becomes receivable (step S703). In addition, during the standby, another processing can coroutinely be executed. Alternatively, it may be arranged such that the following processing (one unit of the iteration thereof) is assigned to the receive interruption of the NIC 109.
And, the CPU 101 examines the type of information designated by the received packet (step S704).

If the packet is a start notification (i.e., "START" for step S704), the CPU 101 sets the playback flag region to "1" (step S705) and then provides control to instruct the DVD-ROM drive 108 and the image processor 107 to start the playing back of receiving end video image information after the allowance time has elapsed (step S706).
Thereafter, the procedure advances to step S712.

To sum up, if a specific type of packet (e.g., a start notification) is received, this means in the present embodiment that the synchronous playback start condition is satisfied. However, even in an embodiment that does not adopt a start notification, it is possible that there is a situation in which the synchronous playback stat condition is satisfied. For example, it may be designed such that information indicative of whether being synchronous or asynchronous is padded to a packet of multimedia information itself, whereby, if synchronous multimedia information is received following asynchronous multimedia information, it means that the synchronous playback start condition is satisfied.

In addition, here, as the timing at which the playing back of receiving end video image information instructed by the CPU 101 is actually started, the following various techniques are conceivable.
(a) The playback is started as soon as preparations therefor are completed, in other words, the allowance time is zero.
(b) The playback is started at the moment that a certain allowance time (which is longer than the grace time in the sending end terminal 301) has elapsed since the time when the instruction was issued.
(c) The playback is started at the moment that a certain allowance time (which is shorter than the grace time in the sending end terminal 301) has elapsed since the time when the instruction was issued.

On the other hand, if the packet is a stop notification (i.e., "STOP" for step S704), the CPU 101 sets the playback flag region to "0" (step S707) and then provides control to instruct the DVD-ROM drive 108 and the image processor 107 to stop the playing back of receiving end video image information (step S708). Thereafter, the control procedure advances to step S712.
Accordingly, the DVD-ROM drive 108 and the image processor 107 function, under the control of the CPU 101, as the receiving end video image playing-back unit 403.

In addition, if the packet is a termination notification (i.e., "TERMINATION" for step S704), then the control procedure advances to step S712.

Furthermore, if the packet is audio information (i.e., "AUDIO" for step S704), then the CPU 101 makes a decision on whether the playback flag region is "0" or not (step S709). If determined that the playback flag region is "0" (i.e., "YES" for step S709), then the audio information is asynchronous audio information. Therefore, the CPU 101 passes this asynchronous audio information to the audio processor 110 (step S710). As a result of doing this, the asynchronous audio information is added to the internal buffer 411 and the audio processor 110 audibly outputs audio information in a proper order.
Accordingly, the audio processor 110 functions, under the control of the CPU 101, as the audio outputting unit 404.
And, a decision is made on whether or not the game is over (step S712). If determined that the game is over (i.e., "YES" for step S712), then the processing is completed. If otherwise (i.e., "NO" for step S712), then the control procedure returns back to step S703.

On the other hand, if the playback flag region is "non-0" (i.e., "NO" for step S709), then the CPU 101 makes an inquiry as to the state of the receiving end video image playing-back unit 403 to thereby make a check on whether the playing back of receiving end video image information is completed or not (step S711). If not completed (i.e., "NO" for step S711), then the CPU 101 issues, since the audio information is synchronous audio information, such an instruction that the synchronous audio information be added in a queue format to the external buffer 412 prepared in the RAM 103 for buffering (step S713). Then, the control procedure advances to step S712.

On the other hand, if completed (i.e., "YES" for step S711), then the playback flag region is set to "0" (step S714), after which the control procedure advances to step S712.

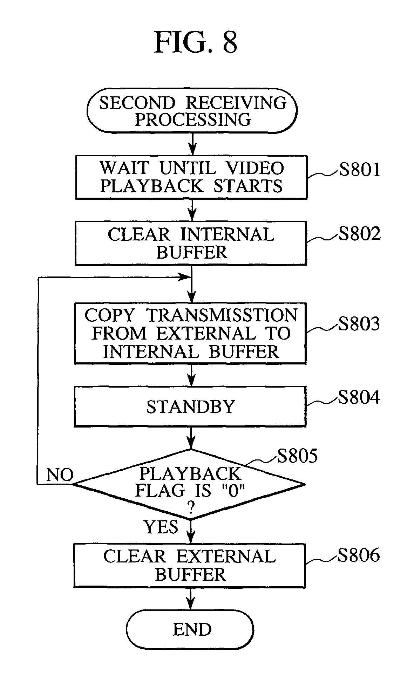

Referring to FIG. 8, there is shown a flowchart representing a flow of controlling the second receive processing that is activated in the receiving end terminal 401, the description of which will be made with reference to this figure.
The starting up of the second receive processing is triggered upon the issue of an instruction that the playing back of receiving end video image information is to start, i.e., the change in state of the playback flag region from "0" to "1". And, the second receive processing is executed concurrently with the first receive processing.

When the second receive processing is started, the CPU 101 waits until the time that the playing back of receiving end video image information is actually started (step S801). Accordingly, it may be arranged such that the second receive processing is started by an interruption that is activated by the starting up of the video image playback.

Subsequently, the internal buffer 411 of the audio processor 110 is cleared (step S802). As a result of doing this, even if asynchronous audio information already ready for playback is prepared, it is cleared and ignored, in other words, the asynchronous audio information will not be audibly output.

Furthermore, the CPU 101 sequentially retrieves synchronous audio information stored in the external buffer 412 for forwarding to the audio processor 110 (step S803). As a result of doing this, the external buffer 412 becomes empty for a moment, and the synchronous audio information stored in the external buffer 412 is added to the internal buffer 411 of the audio processor 110.

Furthermore, the CPU 101 enters the standby mode for a proper length of time in the second receive processing and executes another processing (step S804). This standby time is preferably less than the processing time unit in the sending end terminal 301. In addition, during the standby, it is possible to execute another processing that is executed concurrently with the second receive processing such as the first receive processing and so on.

Subsequently, the CPU 101 makes a check on whether the playback flag region is "0" or not (step S805). If the playback flag region is "0" (i.e., "YES" for step S805), then the external buffer 412 is cleared. The second processing is terminated.
On the other hand, if the playback flag region is not "0" (i.e., "NO" for step S805), the control procedure returns back to step S803.

As described above, the time interval from when the CPU 101 issues an instruction to the receiving end video image playing-back unit 403 until when the playing back of receiving end video image information is actually started (which is referred to as "allowance time") can variously be varied in the range from the length of time lag based on the hardware limitation to the length of time based on the software setting, depending on the type of game.

Therefore, if the allowance time is made longer than the grace time in the sending end terminal 301, then when to start the playing back of receiving end video image information in the receiving end terminal 401 is limited to only when the mortal blow command succeeds. Therefore, once the playing back of receiving end video image information is started, this will not interrupted halfway. Accordingly, in this case, it is possible to omit every processing of the stop notification in the sending end terminal 301 and the receiving end terminal 401.

In addition, it is possible to make, to the DVD-ROM drive 108 and the image processor 107, an enquiry as to what extent the current motion picture information has been played back (as to how many frames have been played back). It is possible to learn whether the playing back of receiving side video information is stated or not by such an enquiry. In addition, it may also be arranged such that the length of time from when the start notification is received is measured and, if it is measured that a predefined allowance time has elapsed, this gives an identification that the playing back of receiving end video information is started.

In addition, for example, in the case where the allowance time is long, a decision is made on whether the playback flag is "0" or not prior to step S802, and if determined that the playback flag is "0", it may be arranged such that processing, such as advancing to step S806, may be carried out.
In addition, if the allowance time is less than the grace time in the sending end terminal 301 or zero, this produces the possibility that the playing back of receiving end video image information is interrupted halfway after being started in the receiving end terminal 401.
Determining what length of the allowance time is selected can be made adequately depending on the manner of online game.

The present application claims priority based on Japanese Patent Application No. 2006-047288 and incorporates therein the contents of this basic patent application as long as the national low of each of designated states permits.

### INDUSTRIAL APPLICABILITY

As has been described above, in accordance with the present invention, it becomes possible to provide: an online game system suitable for use in an online game capable of providing interactive communication by means of voice utterance between game players in which game multimedia information (e.g., audio information representative of a voice uttered in synchronization with video image information by one of the game players and motion picture information as a result of shooting of the manner of a player's gestural movement) is output in synchronization with video image information in a terminal on the side of the other game player; an online game control method; a computer readable information recording medium on which is recorded a program that implements such an online game system and such an online game control method by a computer, and the program.

## Claims

1. An online game system (201) comprising a sending end terminal (301) and a receiving end terminal (401),
(a) wherein the sending end terminal (301) includes:
a multimedia information input accepting unit (302) to accept the input of multimedia information;
a sending end video image playing-back unit (303) to start the playing back of sending end video image information when a predefined playback start condition is satisfied;
a sending unit (304) to distinguish whether the multimedia information whose input is accepted is (i) multimedia information that had been accepted during a period of time from when the predefined playback start condition was satisfied until when the playing back of the sending end video image information was over (this multimedia information being hereinafter referred to as "synchronous multimedia information") or (*ii*) multimedia information other than the synchronous multimedia information (this multimedia information being hereinafter referred to as "asynchronous multimedia information"), the sending unit (304) then sequentially sending the multimedia information whose input is accepted; and
(b) wherein the receiving end terminal (401) includes:
a receiving unit (402) to sequentially receive multimedia information that are sequentially transmitted from the sending end terminal (301);
a receiving end video image playing-back unit (403) to start the playing back of receiving end video image information when a predefined synchronous playback start condition is satisfied with respect to multimedia information received by the receiving unit (402);
a multimedia information outputting unit (404) that is configured such that:
(p) when each of the sequentially received multimedia information is asynchronous multimedia information, then the multimedia information outputting unit (404) sequentially outputs the respective asynchronous multimedia information;
(q) when each of the sequentially received multimedia information is synchronous multimedia information, then the multimedia information outputting unit (404) buffers the respective synchronous multimedia information until the playing back of the receiving end video image information is started and then sequentially outputs the respective buffered synchronous multimedia information once the playing back of the receiving end video image information is started.

2. An online game system comprising a sending end terminal (301) and a receiving end terminal (401),
(a) wherein the sending end terminal (301) includes:
a manipulation input accepting unit (105) to accept a manipulation input from a user;
a multimedia information input accepting unit (302) to accept the input of multimedia information from the user;
a sending end video image playing-back unit (303) to start the playing back of sending end video image information when the accepted manipulated input is detected to be a predefined start manipulation input;
a sending unit (304) that is a sending unit to sequentially transmit information, the type of which includes start notification, multimedia information, or termination notification, to the receiving end terminal (401), the sending unit (304) being configured such that:
(r) when the accepted manipulated input is detected to be a predefined start manipulation input, then the sending unit (304) transmits a start notification to that effect;
(s) when the inputting of the multimedia information is detected to have been accepted for a predefined length of time, then the sending unit (304) transmits the predefined length of time's multimedia information per such detection;
(t) if the playing back of the sending end video image information is detected to be over, the sending unit (304) transmits a termination notification to that effect;
(b) wherein the receiving end terminal (401) includes:
a receiving unit (402) to sequentially receive information that are sequentially transmitted from the sending end terminal (301);
a receiving end video image playing-back unit (403) that is configured such that, if information received by the receiving unit (402) is detected to be the start notification, the receiving end video image playing-back unit (403) starts the playing back of receiving end video image information that is associated with the sending end video image information after a predefined allowance time has elapsed since the detection;
a multimedia information outputting unit (404) to determine that multimedia information that had sequentially been received during a period of time from when the receiving unit (402) received the start notification until when the receiving unit (402) received the termination notification are synchronous information, and that multimedia information that had sequentially been received during other than that period of time are asynchronous multimedia information, the multimedia information outputting unit (404) being configured such that:
(p) when each of the sequentially received information is determined to be asynchronous multimedia information, then the multimedia information outputting unit (404) sequentially outputs the respective asynchronous multimedia information;
(q) when each of the sequentially received information is determined to be synchronous multimedia information, then the multimedia information outputting unit (404) buffers the respective synchronous multimedia information to a buffer region capable of buffering for a time equal to or longer than the predefined allowance time and then sequentially outputs the respective buffered synchronous multimedia information after the playing back of the receiving end video image information is started.

3. The online game system according to claim 2,
(c) wherein, in the sending end terminal (301), the type of the information that is transmitted by the sending unit (304) further includes playback stop information;
(x) the sending end video image playing-back unit (303) stopping and then terminating the playing back of the sending end video image information upon detecting that a predefined playback stop condition is satisfied;
(y) the sending unit (304) transmitting, upon detecting that the predefined playback stop condition has been satisfied, playback stop information to that effect; and
(d) wherein, in the receiving end terminal (401), upon detecting that information received by the receiving unit (402) is the playback stop information, the multimedia information outputting unit (404) erases the buffered synchronous multimedia information and then halts the outputting of multimedia information that had sequentially been received during a period of time from when the playback stop information was received until when the termination notification was received.

4. The online game system according to claim 3, wherein the predefined playback stop condition is satisfied in the sending end terminal (301) if the accepted manipulated input fails to match a predefined manipulation input pattern within a predefined grace period after the predefined playback start condition was satisfied.

5. The online game system according to claim 2, wherein the predefined playback stop condition is satisfied in the sending end terminal (301) if the input-accepted multimedia information fails to fulfill a predefined multimedial characteristic within a predefined grace period after the predefined playback start condition was satisfied.

6. The online game system according to either claim 4 or claim 5, wherein, in the receiving end terminal (401), the multimedia information outputting unit (404) buffers the synchronous multimedia information for a longer length of time than the predefined grace period.

7. An online game control method that is executed in a sending end terminal (301) and a receiving end terminal (401),
(a) wherein, in the sending end terminal (301), the online game control method comprises:
a manipulation input accepting step of accepting a manipulation input from a user;
a multimedia information input accepting step of accepting the input of multimedia information from the user;
a sending end video image playing-back step of starting the playing back of sending end video image information if the accepted manipulated input is detected to be a predefined start manipulation input;
a sending step sequentially sending information, the type of which includes start notification, multimedia information, or termination notification, to the receiving end terminal (401), the sending step being adapted such that:
(r) when the accepted manipulated input is detected to be the predefined start manipulation input, then the sending step transmits a start notification to that effect to the receiving end terminal (401);
(s) when the inputting of the multimedia information is detected to have been accepted for a predefined length of time, then the sending step transmits the predefined length of time's multimedia information per such detection;
(t) when the playing back of the sending end video image information is detected to be over, then the sending step transmits a termination notification to that effect to the receiving end terminal (401);
(b) wherein, in the receiving end terminal (401), the online game control method comprises:
a receiving step of sequentially receiving information that are sequentially transmitted from the sending end terminal (301);
a receiving end playing back step of starting, if information received in the receiving step is detected to be the start notification, the playing back of receiving end video image information that is associated with the sending end video image information after a predefined allowance time has elapsed since the detection;
a multimedia information outputting step of determining that multimedia information that had sequentially been received during a period of time from when the start notification was received in the receiving step until when the termination notification was received in the receiving step are synchronous information, and that multimedia information that had sequentially been received during other than that period of time are asynchronous multimedia information, the multimedia information outputting step being adapted such that:
(p) when each of the sequentially received information is determined to be asynchronous multimedia information, the multimedia information outputting step sequentially outputs the respective asynchronous multimedia information;
(q) when each of the sequentially received information is determined to be synchronous multimedia information, the multimedia information outputting step buffers the respective synchronous multimedia information to a buffer region capable of buffering for a longer length of time than the predefined allowance time and then sequentially outputs the respective buffered synchronous multimedia information after the playing back of the receiving end video image information is started.

8. A computer readable information recording medium having a program recorded thereon that directs a first computer and a second computer to function respectively as a sending end terminal (301) and as a receiving end terminal (401),
(a) wherein the program directs the first computer to function as:
a manipulation input accepting unit (105) to accept a manipulation input from a user;
a multimedia information input accepting unit (302) to accept the input of multimedia information from the user;
a sending end video image playing-back unit (303) to start, when the accepted manipulated input is detected to be a predefined start manipulation input, the playing back of sending end video image information;
a sending unit (304) that is configured to sequentially transmit information, the type of which includes start notification, multimedia information, or termination notification, to the receiving end terminal (401), the sending unit (304) being configured such that:
(r) when the accepted manipulated input is detected to be a predefined start manipulation input, then the sending unit (304) transmits a start notification to that effect;
(s) when the inputting of the multimedia information is detected to have been accepted for a predefined length of time, then the sending unit (304), transmits the predefined length of time's multimedia information per such detection;
(t) when the playing back of the sending end video image information is detected to be over, then sending unit (304) transmits a termination notification to that effect;
(b) wherein the program further directs the second computer to function as:
a receiving unit (402) to sequentially receive information that are sequentially transmitted from the sending end terminal (301);
a receiving end video image playing-back unit (403) configured such that, if information received by the receiving unit (402) is detected to be the start notification, the receiving end video image playing-back unit (403) starts the playing back of receiving end video image information that is associated with the sending end video image information after a predefined allowance time has elapsed since the detection;
a multimedia information outputting unit (404) to determine that multimedia information that had sequentially been received during a period of time from when the receiving unit (402) received the start notification until when the receiving unit (402) received the termination notification are synchronous multimedia information, and that multimedia information that had sequentially been received during other than that period of time are asynchronous multimedia information, the multimedia information outputting unit (404) being configured such that:
(p) when each of the sequentially received information is determined to be asynchronous multimedia information, then the multimedia information outputting unit (404) sequentially outputs the respective asynchronous multimedia information;
(q) when each of the sequentially received information is determined to be synchronous multimedia information, then the multimedia information outputting unit (404) buffers the respective synchronous multimedia information to a buffer region capable of buffering for a longer length of time than the predefined allowance time and then sequentially outputs the respective buffered synchronous multimedia information after the playing back of the receiving end video image information is started.

9. A program that directs a first computer and a second computer to function respectively as a sending end terminal (301) and as a receiving end terminal (401),
(a) wherein the program directs the first computer to function as:
a manipulation input accepting unit (105) to accept a manipulation input from a user;
a multimedia information input accepting unit (302) to accept the input of multimedia information from the user;
a sending end video image playing-back unit (303) to start, if the accepted manipulated input is detected to be a predefined start manipulation input, the playing back of sending end video image information;
a sending unit (304) that is configured to sequentially transmit information, the type of which includes start notification, multimedia information, or termination notification, to the receiving end terminal (401) the sending unit (304) being configured such that:
(r) when the accepted manipulated input is detected to be a predefined start manipulation input, then the sending unit (304) transmits a start notification to that effect;
(s) when the inputting of the multimedia information is detected to have been accepted for a predefined length of time, then the sending unit (304), per such detection, transmits to the receiving end terminal (401) the predefined length of time's multimedia information;
(t) when the playing back of the sending end video image information is detected to be over, then sending unit (304) transmits a termination notification to that effect to the receiving end terminal (401);
(b) wherein the program further directs the second computer to function as:
a receiving unit (402) to sequentially receive information that are sequentially transmitted from the sending end terminal (301);
a receiving end video image playing-back unit (403) configured such that, if information received by the receiving unit (402) is detected to be the start notification, the receiving end video image playing-back unit (403) starts the playing back of receiving end video image information that is associated with the sending end video image information after a predefined lead time has elapsed since the detection;
a multimedia information outputting unit (404) to determine that multimedia information that had sequentially been received during a period of time from when the receiving unit (402) received the start notification until when the receiving unit (402) received the termination notification are synchronous multimedia information, and that multimedia information that had sequentially been received during other than that period of time are asynchronous multimedia information, the multimedia information outputting unit (404) being configured such that:
(p) when each of the sequentially received information is determined to be asynchronous multimedia information, then the multimedia information outputting unit (404) sequentially outputs the respective asynchronous multimedia information;
(q) when each of the sequentially received information is determined to be synchronous multimedia information, then the multimedia information outputting unit (404) buffers the respective synchronous multimedia information to a buffer region capable of buffering for a longer length of time than the predefined allowance time and then sequentially outputs the respective buffered synchronous multimedia information after the playing back of the receiving end video image information is started.
